(19) Europäisches Patentamt
European Patent Office
Office européen des brevets

(11) **EP 4 223 895 A1**

(12) **EUROPEAN PATENT APPLICATION**
published in accordance with Art. 153(4) EPC

(43) Date of publication:
**09.08.2023 Bulletin 2023/32**

(21) Application number: **21875669.0**

(22) Date of filing: **29.09.2021**

(51) International Patent Classification (IPC):
***C22B 1/16*** (2006.01)

(52) Cooperative Patent Classification (CPC):
**C22B 1/16**

(86) International application number:
**PCT/JP2021/035789**

(87) International publication number:
**WO 2022/071369 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2020 JP 2020164574**

(71) Applicant: **JFE Steel Corporation
Tokyo 100-0011 (JP)**

(72) Inventors:
• **TAKEHARA, Kenta
Tokyo 100-0011 (JP)**

• **FUJIWARA, Shohei
Tokyo 100-0011 (JP)**
• **HORITA, Kenya
Tokyo 100-0011 (JP)**
• **HIGUCHI, Takahide
Tokyo 100-0011 (JP)**
• **TAKEDA, Yuji
Tokyo 100-0011 (JP)**
• **FUJIMURA, Reo
Tokyo 100-0011 (JP)**

(74) Representative: **Haseltine Lake Kempner LLP
Bürkleinstrasse 10
80538 München (DE)**

(54) **METHOD FOR MANUFACTURING SINTERED ORE, AND SINTERED ORE**

(57) Provided is a method for manufacturing a sintered that can effectively produce granulated raw material for sintering by promoting core formation in a blended raw material for sintering with a small blending amount of easily-aggregating fine iron ore, and a sintered ore. In the method for manufacturing a sintered ore comprising granulating a blended raw material for sintering containing plural brands of iron ore in a granulator and sintering the granulated raw material for sintering in a sintering machine, a flow rate of water added to the blended raw material for sintering in the granulation per unit area id set to not less than 120 L/min/m$^2$.

FIG. 1

**Description**

Technical Field

This invention relates to a method for manufacturing a sintered ore as a raw material for a blast furnace, and more particularly to a method having a feature of focusing on a granulating method of a blended raw material for sintering, and a sintered ore.

Background Art

A sintered ore is typically manufactured through the following steps. First, auxiliary raw material powder such as limestone, silica stone, or serpentine, miscellaneous raw material powder such as dust, scale, or return ore, and solid fuel such as coke breeze are blended in appropriate amounts into powdery iron ore of multiple types of brands (usually called as sinter feed of about 10 mm) to prepare blended raw material for sintering. Next, water is added to the obtained blended raw material for sintering, and the blended raw material for sintering with the water added thereto is mixed and granulated to obtain granulated raw material for sintering. Then, the obtained granulated raw material for sintering is charged into a sintering machine and sintered to produce a sintered ore. The blended raw material for sintering contains water and thus typically aggregates each other during the granulation to thus turn into quasi-particles. The granulated raw material for sintering resulting from turning into quasi-particles serves to secure favorable air permeability of a sintering raw material charged layer, when charged onto the pallet of the sintering machine, and thus is effective for the smooth progress of the sintering reaction.

In the method for manufacturing a sintered ore described above, when water is added to the blended raw material for sintering unevenly in an insufficient amount during granulation, only fines with a small particle size may aggregate, forming coarse particles with low strength, or remain as the fines with a small particle diameter, which causes a decrease in the air permeability inside the sintering raw material charged layer. Under these circumstances, studies have been made with a focus on how to add water to blended raw material for sintering during granulation.

For example, Patent Literature 1 involves specifying a water spraying flow rate, a spraying angle, a water spraying distance, etc., depending on the change of the surface of blended raw material for sintering inside a granulator, as well as an upper limit of the droplet diameter of water added, preventing not only the generation of coarse particles but also aggregated particles composed only of fines.

Citation List

Patent Literature

Patent Literature 1: JP-A-2016-172903

Summary of Invention

Technical Problem

However, the technology proposed in Patent Literature 1 faces a problem in that the air permeability of the sintering raw material charged layer decreases, as it can mitigate the generation of coarse particles with a large particle size but cannot mitigate the generation of fine particles with a small particle size. As a result, many fine particles with an extremely small particle size are generated, so that the air permeability inside the sintering raw material charged layer and consequently inside a sintered layer decreases and the production rate of a sintered ore decreases. Moreover, the strength of the sintered ore decreases and the product yield decreases, and consequently the air permeability inside a blast furnace that uses the sintered ore decreases. Patent Literature 1 also aims to use a large amount of fine iron ore, which is prone to aggregate, and is not suitable to treat such a raw material that contains a small amount of fine iron ore and thus causes insufficient granulation.

One of the objects of the present invention is to propose a method for manufacturing a sintered ore capable of effectively providing a granulating raw material for sintering by promoting core formation in a blended raw material for sintering that contains a small blending amount of easily-aggregating fine iron ore, and a sintered ore.

Solution to Problem

To achieve the above object, the inventors have made diligent studies with a focus on the flow rate of water added at a granulating step of a blended raw material for sintering in a method of manufacturing a sintered ore, and as a result, found that a granulated raw material for sintering having an improved granulation property is obtained by, contrary to the conventional common knowledge, drastically increasing the flow rate.

That is, the invention relates to a method for manufacturing a sintered ore including granulating a blended raw material for sintering made of iron ore of plural brands in a granulator and sintering the resultant granulated raw material for sintering in a sintering machine to obtain a sintered ore, characterized in that the flow rate of water added to the blended raw material for sintering per unit area in the granulation is set to not less than 120 L/min/$m^2$.

The present invention according to the above configuration has more preferable solutions as follows:

(1) The blended raw material for sintering contains ore including not less than 90 mass% particles with a particle size of not more than 1 mm in an amount of not more than 10 mass% per total iron ore;
(2) When a drum mixer is used in the granulation, the space factor of the drum mixer is set to 10 to 15%;
(3) The average droplet size of the water added is set to not more than 1.1 mm;
(4) The water added contains fine iron ore.

The present invention also relates to a sintered ore that is manufactured by the aforementioned method for manufacturing a sintered ore and is characterized by having excellent air permeability in a blast furnace.

Advantageous Effects of Invention

The method for manufacturing a sintered ore according to the present invention can remarkably improve the granulation of the blended raw material for sintering by drastically increasing the flow rate of water added to the blended raw material for sintering per water spraying area in the granulation to not less than 120 L/min/$m^2$.

Brief Description of Drawings

FIG. 1 is a flow chart explaining an example of each step in a method for manufacturing a sintered ore according to the invention.
FIG. 2 is a schematic view explaining an example of a phenomenon of a granulation process in a method for manufacturing a sintered ore according to the invention.
FIG. 3 is a graph showing a relation between a space factor and a cold air flow rate when a throughput of a raw material in blend A is 1600 t/h or 1000 t/h.
FIG. 4 is a graph showing a relation between a space factor and a cold air flow rate when a throughput of a raw material in blend B is 1600 t/h or 1000 t/h.

Description of Embodiments

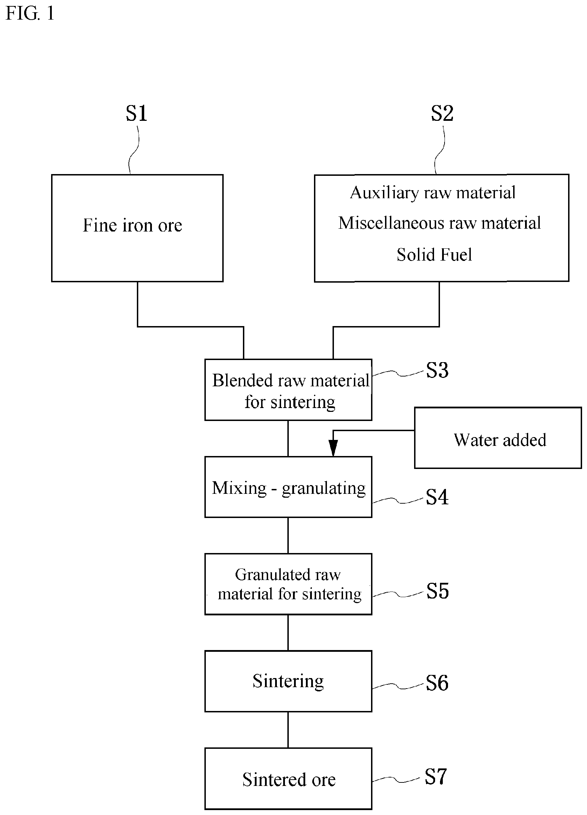

FIG. 1 is a flow chart explaining an example of each step in a method for manufacturing a sintered ore according to the invention. Each step in the method for manufacturing a sintered ore according to the invention will be described with reference to FIG. 1. First, fine iron ore of plural brands is prepared (step S1). Next, proper amounts of auxiliary raw material powder, miscellaneous raw material, and solid fuel prepared in step S2 are blended with the fine iron ore prepared in step S1 to obtain a blended raw material for sintering (step S3). Thereafter, water is added to the resultant blended raw material for sintering and mixed therewith, and the mixture is granulated (step S4) to obtain a granulated raw material for sintering (step S5). Then, the resultant granulated raw material for sintering is charged into a sintering machine and sintered (step S6) to obtain sintered ore (step S7).

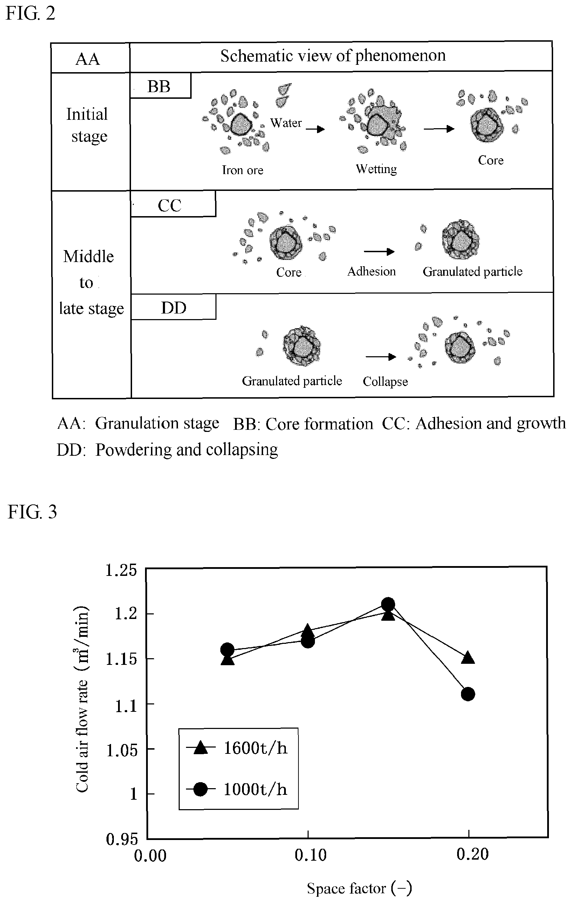

In the method of manufacturing a sintered ore including granulating the blended raw material for sintering containing iron ore of plural brands in the granulator and then sintering the resultant granulated raw material for sintering in the sintering machine according to FIG. 1, the granulation process (step S4) forms the granulated material through repeating the processes of (1) a core particle is formed and (2) a quasi-particle is formed based on the core particle and collapses, as shown in FIG. 2. In this case, the granulation is thought to proceed such that the fines adhere to the core particle with high water content as a starting point. Therefore, we consider that it is necessary to form a region with high water content to promote the granulation, while the granulation is not promoted when water is added not excessively but evenly. In the invention, therefore, studies are made on a method for promoting the core formation in the granulation by drastically increasing the water spraying flow rate per unit area, thus developing a method for providing a granulated raw material for sintering with an improved granulation property.

That is, the most notable feature of the invention involves significantly increasing the flow rate of water added to the blended raw material for sintering per a spraying area in the granulation to not less than 120 L/min/$m^2$. The

invention has a preferable embodiment of using a blended raw material for sintering comprised of ore containing not less than 90 mass% particles with a particle size of not more than 1 mm in an amount of not more than 10 mass% per total iron ore. Setting the space factor in a drum mixer used in the granulation to 10 to 15%; setting the average droplet size of water added to not more than 1.1 mm; and adding water containing fine iron ore are all preferable embodiments of the present invention.

In the method for manufacturing a sintered ore according to the invention, <particle size>, <space factor> and <droplet size of water added> are defined as follows.

<particle size>

It represents a particle size sieved with a sieve having a nominal opening according to JIS (Japanese Industrial Standards) Z8801-1. For example, a particle size of not more than 1 mm is a particle size with which all particles pass through a sieve having a nominal opening of 1 mm according to JIS Z8801-1 and is also represented as "-1 mm".

<space factor>

A space factor $\varphi$ is represented by the following equation (1) using a volume of a horizontal cylinder vessel V ($m^3$), a bulk density of a raw material $\rho$ ($kg/m^3$), and a mass of a raw material remaining in the horizontal cylinder vessel M (kg):

$$\varphi = M/(V \times \rho) \quad \dots (1)$$

The space factor $\varphi$ is known to be inversely proportional to a half power of Froude number Fr represented by an equation (2) using the drum length and drum rotation number of the drum mixer and proportional to the throughput of the raw material. The space factor $\varphi$ is also represented by an equation (3) using a proportional constant K determined depending on conditions such as the drum inclination and so on:

$$Fr = \{L \times (N/60)^2\} / g \dots (2),$$

wherein

Fr donates Froude number (-);
L donates drum length (m);
G donates gravitational acceleration ($m/s^2$); and
N donates drum rotation number (rpm);

$$\varphi = (Q \times K) / Fr^{1/2} \dots (3),$$

wherein
$\varphi$ donates space factor (-);
Q donates throughput of raw material;
Fr donates Froude number (-); and
$Fr^{1/2}$ donates rotation number.

<droplet size of water added>

The droplet size of water added is typically determined by a droplet size inherent to a water spraying nozzle (droplet size under a given pressure according to a manufacturer label), but may be measured by actual spraying. The droplet size may be measured by a method where images of many droplets (for example, not less than 100 droplets) are analyzed with a high-speed camera to calculate an arithmetic average size thereof. The droplet size may, when varies widely, use a Sauter's average particle size that gives the size of one droplet of a volume and surface area corresponding to the total volume and total surface area of the droplet group, respectively. The droplet size may be also measured, for example, by the method disclosed in Patent Literature 1 or by automatic aggregate calculation with a commercially available laser Doppler measuring instrument. It also may be calculated using the used liquid and spraying conditions.

Examples

The following tests 1 to 3 were actually carried out to thus study a configuration inevitable and a configuration preferable to the method for manufacturing sintered ore according to the invention.

<Test 1>

(Flow rate per spraying area when water added to the blended raw material for sintering in the granulation)

A study was made on the influence of a flow rate per unit area in a drum mixer. A raw material including 49 mass% South America ore, 49 mass% Australia ore, and 2 mass% quicklime was used. A test was conducted by inserting a movable nozzle into a drum mixer with varying the spraying area. Granulation was performed for 5 minutes using the drum mixer with a diameter of 1 m and a depth of 0.3 m. The water spraying uses a slurry prepared by mixing water and fine iron ore in a weight ratio of 4:1 to 2:3, or only water. Thereafter, the raw material was charged into a cylinder with a diameter of 100 mm and a height of 300 mm to define air permeability as a cold air flow rate determined by passing air under constant pressure, evaluating the progress rate of the air permeability. This test used the results of the case where the normal spraying area is 0.015 $m^2$. Table 1 shows the results.

Table 1

|  | Water spraying area ($m^2$) | Form of water added | Water spraying flow rate (L/min) | Flow rate per unit area (L /min/$m^2$) | Air permeability after granulation (% to Comparative Example 2) |
|---|---|---|---|---|---|
| Comparative Example 1 | 0.015 | Slurry | 1.4 | 93 | 101 |
| Comparative Example 2 | 0.015 | Water | 1.4 | 93 | 100 |
| Example 1 | 0.01 | Slurry | 1.4 | 140 | 108 |
| Example2 | 0.0075 | Slurry | 1.4 | 187 | 110 |
| Example3 | 0.005 | Slurry | 1.4 | 280 | 116 |
| Example4 | 0.02 | Water | 2.4 | 120 | 105 |

Table 1 clearly shows that the granulation drastically improves and allows the air permeability to improve when the flow rate per unit area is not less than 120 L/min/$m^2$ in the addition of water to the blended raw material for sintering during the granulation. This is considered due to the fact that the core formation advanced to thus improve the granulation. As seen from the above, it is the inevitable configuration of the invention that the flow rate of water added to the blended raw material for sintering during the granulation is set not less than 120 L/min/$m^2$.

<Test 2>

(Preferable range of the space factor when using the drum mixer during granulation)

An optimum space factor in the drum mixer was examined under the condition satisfying the flow rate of water added per unit area in Test 1. A proper space factor was examined using usual Australia ore and South America ore and 10 mass% fines concentrate. The Australia ore and South America ore each had a modal diameter of not less than 1 mm, while the fines concentrate contained 94 mass% particles with a particle size of not more than 1 mm. Table 2 shows the blending ratio of blend A and blend B used. A drum mixer having a diameter of 1 m and a depth of 0.3 m was used. Then, the raw material was charged into a cylinder with a diameter of 100 mm and a height of 300 mm, and a cold air flow rate measured when air was passed therein at constant pressure was used as air permeability, the progress ratio of which was evaluated.

Table 2

|  | Blend A | Blend B |
|---|---|---|
| Australia ore | 60% | 50% |

(continued)

|  | Blend A | Blend B |
|---|---|---|
| South America ore | 40% | 40% |
| Fines concentrate | 0% | 10% |

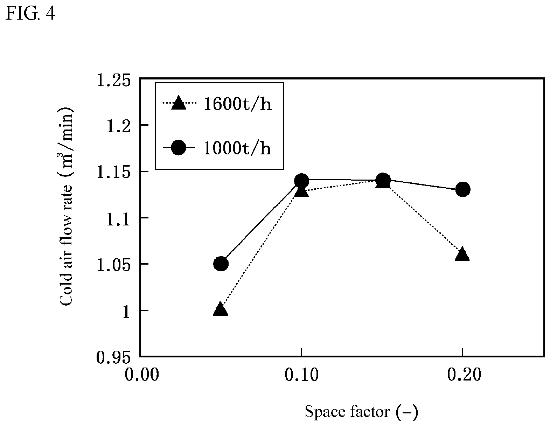

FIG. 3 shows a relation between the space factor and air permeability in each case when the throughput of the raw material in blend A is 1600 t/h or 1000 t/h. As seen from the results of FIG. 3, the space factor in blend A is properly 5 to 15%, and preferably 10 to 15%. FIG. 4 shows a relation between the space factor and air permeability in each case when the throughput of the raw material in blend B is 1600 t/h or 1000 t/h. As seen from the results of FIG. 4, the space factor in blend B is properly 10 to 20%, and preferably 10 to 15%.

The above results clearly show that the space factor is preferably 10 to 15% when the fines concentrate containing 94 mass% particles with a particle size of not more than 1 mm is blended in an amount of not more than 10 mass%. The presumed mechanism for this is that the space factor of 10 to 15% allows time for the fines to contact and adhere to the surface of the core, which has excessive water by the contact with the sprayed water, thereby ensuring more proper adhesion of the fines to the surface of the core.

<Test 3>

(Preferable range of average droplet size of water added during granulation)

Studies were made on a preferable range of the average droplet size of water added during the granulation in Comparative Example 1 and Examples 1 to 3 of Test 1 and new Examples 5 to 6 using a raw material containing 49 mass% South America ore, 49 mass% Australian ore, and 2 mass% quicklime. The test was conducted by inserting a movable nozzle into a drum mixer and varying the spraying area. The drum mixer had a diameter of 1 m and a depth of 0.3 m, and granulation was performed for 5 minutes. Two types of nozzles of a fan-type nozzle and a two-fluid nozzle were used for evaluation. The area added using the nozzle was measured based on the area where water was sprayed onto the raw material previously placed on a pad.

Then, the raw material was charged into a cylinder with a diameter of 100 mm and a height of 300 mm, and a cold air flow rate measured when air was passed therein at constant pressure was used as air permeability, the progress ratio of which was evaluated. This test used the result when water was added with a usual spraying area of 0.015 m$^2$ as a standard for evaluation. The evaluation results are shown in Table 3.

Table 3

|  | Spraying nozzle | Water spraying area (m$^2$) | Forms of water added | Water spraying flow rate (L/min) | Flow rate per unit area (L/min/m$^2$) | Air permeability aftergranulation (%) | Droplet size (mm) |
|---|---|---|---|---|---|---|---|
| Comparative Example 1 | Not sprayed (Dropped) | 0.015 | Slurry | 1.4 | 93 | 101 | 4.2 |
| Example 1 | Not sprayed (Dropped) | 0.01 | Slurry | 1.4 | 140 | 108 | 4.2 |
| Example 2 | Not sprayed (Dropped) | 0.0075 | Slurry | 1.4 | 187 | 110 | 4.1 |
| Example 3 | Not sprayed (Dropped) | 0.005 | Slurry | 1.4 | 280 | 116 | 4.1 |
| Example 5 | Fan-type | 0.011 | Slurry | 2.8 | 249 | 123 | 1.1 |
| Example 6 | Two-fluid nozzle | 0.02 | Slurry | 2.4 | 120 | 125 | 1.0 |

As seen from the results of Table 3, the air permeability after the granulation can be improved by increasing the flow rate per unit area, as shown in Example 3, and can be further improved by using the two-fluid nozzle or the fan-type nozzle. The droplet size of not more than 1.1 mm can further improve the air permeability. This is considered due to the fact that the coarse core particles are prone to be formed under the condition the flow rate per unit area is increased, while the formation of the coarse core is suppressed by decreasing the droplet size, allowing adequate granulation. It is also considered due to the fact that the sintering advances uniformly by suppressing the formation of the coarse core so that the strength of the sintered ore is increased, improving the air permeability in the blast furnace.

Industrial Applicability

In the method of manufacturing a sintered ore according to the invention, the granulation of the blended raw material for sintering can be improved remarkably by drastically increasing the flow rate of water added to the blended raw material for sintering during the granulation per spraying area to not less than 120 L/min/m$^2$, and also this manufacturing method is applicable to various blended raw materials in addition to the aforementioned raw material.

**Claims**

1. A method for manufacturing a sintered ore comprising granulating a blended raw material for sintering made of iron ore of plural brands in a granulator and sintering a resultant granulated raw material for sintering in a sintering machine, **characterized in that**
a flow rate of water added to the blended raw material for sintering per unit area in the granulation is set to not less than 120 L/min/m$^2$.

2. The method for manufacturing a sintered ore according to claim 1, wherein
the blended raw material for sintering contains ore including not less than 90 mass% particles with a particle size of not more than 1 mm in an amount of not more than 10 mass% per total iron ore.

3. The method for manufacturing a sintered ore according to claim 1 or 2, wherein
when a drum mixer is used in the granulation, a space factor of the drum mixer is set to 10 to 15%.

4. The method for manufacturing a sintered ore according to any one of claims 1 to 3, wherein
an average droplet size of the water added is set to not more than 1.1 mm.

5. The method for manufacturing a sintered ore according to any one of claims 1 to 4, wherein
the water added contains fine iron ore.

6. A sintered ore **characterized by** manufacturing a method claimed in any one of claims 1 to 5 and having an excellent air permeability in a blast furnace.

FIG. 1

FIG. 2

| AA | Schematic view of phenomenon | | |
|---|---|---|---|
| Initial stage | **BB** | Iron ore → Water → Wetting → Core | |
| Middle to late stage | **CC** | Core → Adhesion → Granulated particle | |
| | **DD** | Granulated particle → Collapse | |

AA: Granulation stage   BB: Core formation  CC: Adhesion and growth
DD: Powdering and collapsing

FIG. 3

FIG. 4

**EP 4 223 895 A1**

## INTERNATIONAL SEARCH REPORT

| International application No. |
|---|
| **PCT/JP2021/035789** |

**A.    CLASSIFICATION OF SUBJECT MATTER**

***C22B 1/16***(2006.01)i
FI:   C22B1/16 N; C22B1/16 K

According to International Patent Classification (IPC) or to both national classification and IPC

**B.    FIELDS SEARCHED**

Minimum documentation searched (classification system followed by classification symbols)

C22B1/16

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2013-204058 A (JFE STEEL CORP.) 07 October 2013 (2013-10-07)<br>entire text | 1-6 |
| A | JP 2020-33595 A (NIPPON STEEL CORP.) 05 March 2020 (2020-03-05)<br>entire text | 1-6 |
| A | JP 2020-152964 A (KOBE STEEL LTD.) 24 September 2020 (2020-09-24)<br>entire text | 1-6 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **18 October 2021** | **02 November 2021** |

| Name and mailing address of the ISA/JP | Authorized officer |
|---|---|
| **Japan Patent Office (ISA/JP)**<br>3-4-3 Kasumigaseki, Chiyoda-ku, Tokyo 100-8915<br>**Japan** | |
| | Telephone No. |

Form PCT/ISA/210 (second sheet) (January 2015)

11

## INTERNATIONAL SEARCH REPORT
### Information on patent family members

International application No.

**PCT/JP2021/035789**

| Patent document cited in search report | | | Publication date (day/month/year) | Patent family member(s) | | | Publication date (day/month/year) |
|---|---|---|---|---|---|---|---|
| JP | 2013-204058 | A | 07 October 2013 | WO | 2013/145332 | A1 | |
| | | | | TW | 201339319 | A | |
| JP | 2020-33595 | A | 05 March 2020 | (Family: none) | | | |
| JP | 2020-152964 | A | 24 September 2020 | (Family: none) | | | |

Form PCT/ISA/210 (patent family annex) (January 2015)

**EP 4 223 895 A1**

## REFERENCES CITED IN THE DESCRIPTION

**Patent documents cited in the description**

- JP 2016172903 A